# EUROPEAN PATENT APPLICATION

(11) **EP 1 627 679 A1**
(43) Date of publication of application: **22.02.2006**
(21) Application number: 04734131.8
(22) Date of filing: 20.05.2004
(51) Int. Cl.: B01J 19/00

(54) **APPARATUS FOR PRODUCING SPHERICAL POWDER, BURNER FOR TREATING POWDER, METHOD FOR PRODUCING SPHERICAL POWDER, SPHERICAL OXIDE POWDER AND OXIDE POWDER**

(30) Priority: 23.05.2003 JP 2003145992; 23.06.2003 JP 2003177551; 27.06.2003 JP 2003185119
(71) Applicant: TDK Corporation, Chuo-ku, Tokyo 103-8272 (JP)
(72) Inventor: CHE, Shenglei, TDK CORPORATION, Tokyo, 1038272 (JP)
(74) Representative: HOFFMANN EITLE
(86) International application number: PCT/JP2004/007202
(87) International publication number: WO 2004/103548

(57) **Abstract**

There is provided an apparatus for producing a spherical powder, comprising a cylindrical chamber having an axis extending in the vertical direction and a burner 30 provided in the upper part of the chamber to generate a combustion flame in the chamber, **characterized in that** the aggregate-crushing gas G is injected from the periphery part of the first supply pipe 61, which constitutes a raw material powder supply route O, into the first supply pipe 61. This configuration can allow a raw material powder to be supplied to the combustion flame with an aggregate of the raw material powder crushed, and suppress generation of coarse particles or unmelted particles resulting from aggregation of particles. The raw material powder to be supplied to the apparatus for producing a spherical powder may have a treating agent such as stearic acid, or a coupling agent added thereto for preventing aggregation.

## Description

### Technical Field

The present invention relates to an apparatus for producing a spherical powder, a method for producing a spherical powder, and the like.

### Background Art

In production of ceramic fillers for paints, composite materials and the like, the powder particles have been required to have various characteristics, e.g., sphericity and surface smoothness, to improve particle dispersibility, packing property and fluidity.

Methods for producing spherical powder particles include those based on sol-gel process and spray pyrolysis to directly synthesize spherical particles. These methods, however, involve problems of high cost and amount of production is limited.

Other methods for producing spherical powder particles include melting the particles while they are floating in a flame, e.g., combustion flame or thermal plasma, or in an electric furnace operating at high temperature, to make them spherical by utilizing surface tension of the liquid. A spherical powder has been commonly produced by melting a raw material powder in a flame (refer to, e.g., claims of Japanese Patent Laid-Open No. 2003-40680).

Japanese Patent 3,312,228 discloses synthesis of inorganic spheres, in which a raw material powder is supplied into a combustion flame in a combustion chamber via a powder distributor provided with a number of small holes and located between a raw material powder supply route and the combustion chamber.

Japanese Patent 3,001,561 discloses a raw material transfer pipe with a fanning-out opening. In the present specification, the term "powder" means collective entity of particles. The term "powder" is used when it is appropriate to indicate the collective entity. It is more appropriate in some cases to use the term "particle" as the constituent unit for powder. In this specification, however, the term "powder" is basically used, unless use of the term "particle" is more appropriate, because they substantially share the common basic unit.

Next, the treatment flow in an apparatus for producing a spherical powder using a combustion flame is shown. First, a raw material powder supplied from a feeder is transferred by a carrier gas to a burner, to which oxygen and fuel gas (e. g. , LPG) are supplied by a respective oxygen supplying means and fuel gas supplying means, to generate a combustion flame in a chamber provided under the burner. The raw material powder, after being melted into spheres in the combustion flame in the chamber, is recovered by a downstream cyclone or bag filter.

The raw material powder size (diameter) is set in consideration of size (diameter) of the spherical powder as the final product. However, particles of a raw material powder will naturally aggregate while being held in a feeder, notably when the powder is fine. The resulting aggregate, when directly supplied to a burner to be melted, may cause problems, e.g., production of coarse particles having a several times larger diameter than intended, or unmelted particles due to locally lowered temperature in the combustion flame or other troubles mainly resulting from aggregation of the particles.

One of the methods for crushing the aggregated particles is use of a powder distributor, as disclosed in Japanese Patent 3,312,228, mentioned earlier. However, such a powder distributor is difficult to crush the aggregated particles, because the particles may stick to the distributor itself while passing therethrough.

A raw material transfer pipe with a fanning-out opening, as disclosed by Japanese Patent 3,001,561, cannot crush aggregated raw material powder particles, and is not an effective means for suppressing occurrence of coarse particles.

A raw material powder sharply deteriorates in fluidity in a supply system for a spherical powder production apparatus, as it becomes finer. Deteriorated fluidity may cause various problems, e.g., bridging of the particles in a feeder hopper to stop feed supply, or clogging in a supply pipe leading to a burner or in a burner itself, to stop feed supply or cause significant pulsation. When pulsation occurs, a raw material powder is massively thrown into a flame all at once, which, in turn, causes problems, e.g., the product powder includes unmelted particles, or melting of large blocks to produce coarse particles.

Therefore, how fluidity of a raw material powder is maintained to supply it in well-dispersed conditions is an important challenge in production of fine spherical powder.

The present invention is developed to solve these technical problems. The objects of the present invention are to provide an apparatus for producing a spherical powder, capable of suppressing occurrence of coarse particles or unmelted particles resulting from aggregation of the particles; burner for treating a powder; and method for producing a spherical powder, capable of stably supplying a raw material powder in well-dispersed conditions to suppress occurrence of coarse particles or unmelted particles resulting from aggregation of the particles

### Disclosure of the Invention

The inventors of the present invention have found, after having extensively studied to supply a raw material powder into a combustion flame while keeping aggregated particles crushed, that injection of a gas from the outer periphery of a raw material transfer pipe into the pipe inside is very effective for crushing them. The present invention provides an apparatus for producing a spherical powder, comprising a cylindrical chamber having an axis extending in the vertical direction and burner provided in the upper part of the chamber to generate a combustion flame in the chamber, characterized in that the burner comprises a raw material transfer pipe through which a raw material powder is transferred to the combustion flame generated by the burner and also with a gas injection part in which a gas is injected from the outer periphery of the raw material transfer pipe into the raw material transfer pipe. The outer periphery of the raw material transfer pipe widely includes the outer and inner surfaces of the pipe wall and also pipe outside. Thus, the apparatus of the present invention for producing a spherical powder is designed to inject a gas from the outer periphery of the raw material transfer pipe, and can supply a raw material powder into a combustion flame while keeping aggregated particles crushed.

The gas injection part for the apparatus of the present invention for producing a spherical powder may be provided with one or more notches on the raw material transfer pipe wall.

The apparatus of the present invention for producing a spherical powder may be designed to have a gas passage through which a gas flows over the raw material transfer pipe and injected into the pipe inside through the one or more notches provided on the pipe wall.

The present invention also provides a burner for treating raw material powder with combustion flame in a predetermined manner. It is a novel burner having a suitable structure for crushing aggregated raw material powder particles. The burner of the present invention for treating powder comprises a first supply pipe which has an opening at one end, and supplies the raw material powder to the combustion flame through the opening; second supply pipe which supplies an aggregate-crushing gas for crushing an aggregate of the raw material powder; and communication part which communicates the first supply pipe with the second supply pipe to direct the aggregate-crushing gas to the first supply pipe at a predetermined angle. The first supply pipe for the burner of the present invention, which functions as a raw material transfer pipe, can supply a raw material powder into a combustion flame, with aggregated particles crushed by an aggregate-crushing gas injected into the pipe via the communication part. This allows the aggregated raw material powder particles to be crushed and treated in a predetermined manner in a combustion flame. The treatment may be spheroidization, production of composite particles or oxidation of metal particles into the oxide particles.

In the burner of the present invention for treating a powder, the second supply pipe has a double-layered pipe structure with the first supply pipe stored therein and the aggregate-crushing gas flows in the space between the first supply pipe and the second supply pipe. It is preferable that the first supply pipe can be detachably attached to the second supply pipe. The first supply pipe, which functions as a raw material transfer pipe, is eroded severely by friction with a raw material powder, and is preferably exchanged periodically. The above design such that the first supply pipe can be detachably attached to the second supply pipe, facilitates burner maintenance and reduces the equipment cost.

The aggregate-crushing gas can effectively crush the aggregated raw material powder particles, when injected into the first supply pipe at a predetermined angle, 5 to 85° to the first supply pipe axis.

The present invention also provides a method for producing a spherical powder by melting a raw material powder in a combustion flame into spheres. It comprises steps of transferring the raw material powder to a combustion flame by a carrier gas; melting the transferred raw material powder in a combustion flame into spheres to obtain a melted product; and of solidifying the melted product by moving the melted product from the combustion flame to the outside thereof. In the transferring step, injection of a gas for imparting a shear stress to the raw material powder can very efficiently suppress occurrence of coarse particles or unmelted particles.

The gas for imparting a shear stress may be the same kind as the carrier gas. When N₂ gas is used as the carrier gas, then the gas for imparting a shear stress will be N₂ gas. When air is used as the carrier gas, then the gas for imparting a shear stress will be air.

The above problems become very notable when the raw material powder is treated under severer conditions e.g., to have a mean particle size of 1 to 2 µm and largest particle size of 5 µm, to an extent to pose a barrier to stable production of the spherical powder. Therefore, further improvements are required to solve these problems.

The inventors of the present invention have come up with an idea that aggregation of the raw material particles might be prevented when they are surface-treated with wax, after having extensively studied to solve these problems, noting wax of a higher fatty acid (e.g., stearic acid) or derivative thereof, or higher hydrocarbon or higher alcohol. They also have noted a coupling agent, which is mainly used for bridging an organic and inorganic materials to each other, while they were searching for surface modification methods and treating agents. They have also come up with an idea that the aggregation might be prevented, when the particles are surface-treated with a coupling agent.

The method of the present invention for producing a spherical powder, developed based on the above ideas, comprises a surface treatment step in which a raw material powder is surface-treated with a treating agent or a coupling agent to prevent aggregation of the particles, and a spherical powder production step in which the surface-treated raw material powder is put in a combustion flame generated by the burner, melted into spheres and the raw material powder is moved from the combustion flame to the outside thereof and solidified to obtain a spherical powder.

In the surface treatment step, the raw material powder can be effectively surface-treated, when mixed with a coupling agent and water as a solvent, water being afterward removed. The raw material powder is milled into a given particle size by a ball mill or the like in a milling step, which inherently includes a drying step. Treatment with a coupling agent prior to the drying step can satisfy the object essentially needing no additional step nor increasing cost, because water can be removed in the drying step.

The suitable coupling agents include those based on silane and titanate. The powder treated with a silane-based agent tends to have higher lubricity than that treated with a titanate-based one. Therefore, the present invention more preferably treats the powder with a silane coupling agent, in particular methyltrimethoxysilane.

The raw material powder is incorporated with a coupling agent preferably at 0.1 to 3.0%, more preferably 0.5 to 1.5%, still more preferably 0.5 to 1.0%, all percentages by weight.

The treating agent, when used in the surface treatment step to prevent aggregation of the particles, may be at least one selected from the group consisting of higher fatty acid, derivative thereof, higher hydrocarbon and higher alcohol. More specifically, the preferable agent is stearic acid, stearic acid amide or hydrogenated castor oil. It is recommended that the raw material powder is surface-treated by being heated together with a treating agent at a predetermined temperature and then stirred in the surface treatment step. The treatment temperature is set at melting point of the treating agent or higher, more preferably in a range in which the agent is burned and scattered, or vaporized and gasified.

Moreover, repeating the heating/stirring cycles is also effective, where it is preferable to cool the mixture to melting point of the agent or lower prior to the reheating. This allows the agent to stick to the powder surfaces uniformly.

The treating agent is preferably added to the raw material powder at 0.1 to 8.0% by weight.

The raw material powder, to be put in a combustion flame generated by the burner in the spherical powder production step, may be dispersed by a dispersing means when the particles are in an aggregated condition.

The dispersing means may be selected from widely varying ones, e. g. , collision of the aggregated raw material particles to disperse them. Of these, a particularly suitable means involves injection, at a predetermined angle, of a gas into a passage in which the raw material powder is supplied into the combustion flame.

The above-described method for producing a spherical powder can give spherical oxide powder having a mean particle size of 5 µm or less and a largest particle size of 10 µm or less, more preferably a mean particle size of 3 µm or less and a largest particle size of 5 µm or less.

In this case, for production of a spherical powder, a raw material powder, which is melted in a combustion flame to have a spherical shape, is preferably an oxide powder surface-treated with at least one treating agent selected from the group consisting of higher fatty acid, derivative thereof, higher hydrocarbon and higher alcohol or with a coupling agent to prevent the powder to aggregate, and having a mean particle size of 5 µm or less.

### Brief Description of the Drawings

Figure 1 is a sectional view illustrating structure of an apparatus for producing a spherical powder as one embodiment of the present invention, where the burner is not shown by a sectional view;
Figure 2 schematically illustrates features of a burner as one embodiment of the present invention;
Figure 3 is a sectional view illustrating a burner structure;
Figures 4A, 4B and 4C are sectional views of the burner shown in Figure 3 along the line A-A, B-B and C-C, respectively;
Figure 5 is a variation of a raw material powder supply pipe as a burner component;
Figure 6 summarizes the results of Example 1;
Figure 7 summarizes the results of Example 2;
Figure 8 summarizes the results of Example 2, showing the relationship between repose angle and additive amount of treating agent;
Figure 9 summarizes the results of Example 2, showing the relationship between bulk density and additive amount of treating agent;
Figure 10 summarizes the results of Example 2, showing the relationship between particle size distribution and additive amount of treating agent;
Figure 11 presents photographs showing structures of Samples 11, 12 and 13;
Figure 12 summarizes the results of Example 3;
Figure 13 summarizes the results of Example 3, showing the relationship between repose angle and additive amount of treating agent;
Figure 14 summarizes the results of Example 3, showing the relationship between bulk density and additive amount of treating agent;
Figure 15 shows an apparatus structure for measuring particle size distribution of the particles ejected from a burner;
Figure 16 shows a particle size distribution measured by the apparatus shown in Figure 15;
Figure 17 shows the particle size distributions of the simply mixed samples; and
Figure 18 shows the particle size distributions of the ball-milled samples.

### Best Mode for Carrying Out the Invention

The apparatus of the present invention for producing a spherical powder is characterized by a combustion flame-generating burner equipped with a mechanism for crushing aggregated raw material powder particles. Occurrence of coarse particles or unmelted particles resulting from aggregation of the particles can be prevented, when the aggregated particles are crushed before being injected into a combustion flame.

The present invention is described in detail by referring to the attached drawings illustrating the preferred embodiments.

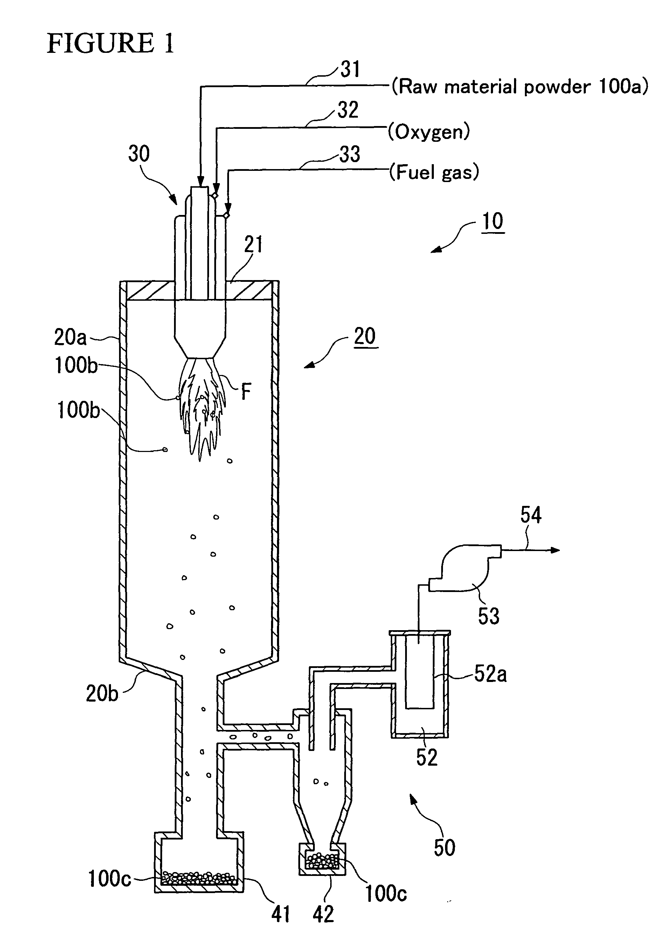

Figure 1 is a sectional view illustrating structure of an apparatus for producing a spherical powder as one embodiment of the present invention.

Referring to Figure 1, the apparatus 10 for producing a spherical powder comprises the chamber 20 and burner (powder treating burner) 30 provided on the chamber 20. The apparatus 10 is further equipped with the treated powder recovering means comprising the recovering container 41 and cyclone 42 below the chamber 20, and gas discharging means 50. The cyclone 42 constitutes part of the treated powder recovering means and, at the same time, part of the gas discharging means 50.

The chamber 20 is made of a heat-resistant material, e.g., stainless steel or alumina, and tubular in shape having an axis extending in the vertical direction. It comprises the tubular wall section 20a having the same inner diameter and taper section 20b whose inner diameter tapering downwards continuously from the bottom end of the section 20a.

The chamber 20 is equipped with the lid 21 which covers an opening at the top. The lid 21 holds the burner 30 facing the center of the chamber 20, and is surrounded by a water-cooling jacket (not shown) over the outer periphery part. The jacket is provided to control the combustion flame F generated by the burner, and protect the apparatus 10 for producing a spherical powder from being damaged by the heat of the combustion flame F. Not only the lid 21 but also the tubular section 20a and taper section 20b of the chamber 20 are water-cooled by the water-cooling jacket (not shown).

The burner 30 has a water-cooled, multiple-pipe structure, to which the raw material powder supplying system 31, oxygen supplying system 32 and fuel gas supplying system 33 are connected separately to supply the raw material powder (oxide powder) 100a, oxygen as a combustion assist gas and fuel gas, respectively. The structure of burner 30 is described in detail later.

The raw material powder 100a to be supplied by the raw material powder supplying pipe system 31 may be an oxide composition, e.g., that used for a dielectric or magnetic material. The dielectric materials include oxides based on barium titanate, lead titanate, calcium titanate, strontium titanate, titanium dioxide and barium neodititanium (BNT). The magnetic materials include ferrites based on Mn-Zn, Ni-Zn, Mn-Mg-Zn and Ni-Cu-Zn. The raw material powder 100a may be also iron oxide, e.g., Fe₂O₃ or Fe₃O₄.

The method for producing the raw material powder 100a is not limited. For example, a milled powder may be used.

Size of the raw material powder 100a may be adequately set according to size of the desired spherical powder product. For example, a powder having a mean particle size of 1 to 10 µm may be used as the raw material powder 100a, when a spherical powder having a mean particle size of 1 to 10 µm is to be produced as the final product. When a spherical powder having a mean particle size of 1 to 2 µm is to be produced as the final product, a powder having a mean particle size of 1 to 2 µm may be used as the raw material powder 100a.

The rawmaterial powder 100a preferably has a mean particle size of 2 µm or more, more preferably 3 to 10 µm, viewed from stable supply of the powder 100a with the burner 30. However, the powder 100a having a mean particle size less than 2 µm may be used, when it is sufficiently fluid in the raw material powder supplying system 31 to be stably supplied.

When the raw material powder 100a has a mean particle size of 1 to 2 µm, it is preferably incorporated with a treating agent or another additive (coupling agent) to enhance its fludity before being sent to the apparatus 10 and thrown into the combustion flame F generated by the burner 30 to produce the spherical powder.

The suitable treating agents to be incorporated in the raw material powder 100a include a dispersant, and wax of higher fatty acid or a derivative thereof, higher hydrocarbon or higher alcohol used as a surface treating agent. More specifically, the suitable wax is that of stearic acid, stearic acid amide or hydrogenated castor oil.

These waxes, which are free of a metal element, will not change the raw material powder 100a composition, even after being subjected to the spheroidization treatment, described later in detail.

The raw material powder 100a is incorporated with the treating agent preferably at 0.1 to 8.0%, more preferably 1.0 to 5.0%, all percentages by weight.

The raw material powder 100a incorporated with the treating agent is preferably put in an essentially closed container to prevent scattering of the agent, and is preferably thrown into a furnace (dry furnace or the like) and heated to a melting point of the agent or higher.

The agent incorporated in the powder 100a can be melted in the furnace, or further evaporated and gasified to stick to the powder 100a surfaces thinly and uniformly.

The powder 100a and agent are kept hot for a predetermined time after being fed to the furnace, and then taken out of the furnace followed by stirring of the powder 100a and the melted treating agent.

The heating/stirring step in the furnace is preferably repeated, as required.

The additives to be incorporated in the powder 100a include silane-based and titanate-based coupling agents, the former being more preferable.

A silane-based coupling agent is hydrolyzed to be bound to the OH group on the oxide powder 100a surface through the hydrogen bond, and coats the surface with the silane film. It is fast bound to the surface chemically by the dehydration/condensation reaction, when the powder 100a coated with silane film is dried. As a result, the powder 100a has reduced water absorptivity and stabilized.

The suitable silane-based coupling agents include methyltrimethoxysilane, e.g., TSL-8113 (trade name) (GE-Toshiba Silicone).

The additive is incorporated with the raw material powder 100a preferably at 0.5% or more, more preferably 0.5 to 1.5%, all percentages by weight, when the powder has a mean particle size of 1 to 1.5 µm. The preferable amount, however, varies depending on specific surface area of the powder.

The additive is preferably incorporated after being dissolved in water or another solvent, and then dried.

Water is a preferable solvent. The raw material is generally milled by a ball mill or the like and is dried to produce the raw material powder 100a of predetermined particle size. Accordingly, in case that water is used as a solvent and the powder 100a and the water are mixed, then the mixture milled and dried, the milling step inherently includes a filtration and drying steps, which can remove water as the solvent from the raw material powder 100a essentially without needing an additional step. The powder 100a can be dried in the drying step by being heated in a dry furnace, e.g., at 100°C for a predetermined time to evaporate water.

The raw material powder 100a is supplied by the aid of a carrier gas, e.g., air, an oxidizing gas or inert gas. The oxidizing gas can contain oxygen at 20% or more. The inert gas may be an N₂, He, Ne, Ar, Kr, Xe or Rn gas.

It is necessary to increase the amount of carrier gas, in order to increase supply of the raw material powder 100a, needless to say. When the carrier gas contains oxygen, it is necessary to control the ratio of the carrier gas to the combustion assist gas, i.e., oxygen, by decreasing the latter. When the combustion assist gas, i.e. oxygen, is used as the carrier gas, the combustion flame temperature may be excessively increased to cause unstable temperature distribution, with the result that a part of elements of the raw material powder 100a may be evaporated or have notably fluctuated composition.

The burner 30 ejects oxygen supplied by the oxygen supplying system 32 and fuel gas supplied by the fuel gas supplying system 33 downwards into the chamber 20. The combustion flame F is generated at the center on the upper side of the chamber 20, when the burner 30 is ignited.

The fuel gas to generate the combustion flame F is not limited. It may be selected from known fuel gases, e.g., LPG, hydrogen and acetylene. When the desired spherical powder product is of oxide, it is necessary to control oxidation degree of the combustion flame F. Therefore, oxygen, i.e., combustion assist gas, is preferably supplied at an adequate level for the fuel gas used. The stoichiometric oxygen/fuel ratio is 5 with LPG, 2.5 with acetylene and 0.5 with hydrogen. Oxidation degree of the combustion flame F can be controlled by adequately setting an oxygen supply amount, based on the above stoichiometric ratio. Flow rate of the fuel gas may be adequately set according to the size of the burner 30.

Temperature of the combustion flame F varies depending on various parameters, e.g., type and amount of fuel gas, fuel/oxygen ratio, and supply rate of the raw material powder 100a. Flame temperature can be increased up to around 2100°C with LPG as a fuel gas, and to around 2600°C with acetylene.

Combustion flame F temperature varies by location in combustion region. For example, temperature at the center differs from that around the periphery part. Therefore, not only size of the flame F or the like but also position at which the raw material powder 100a is thrown into the flame F are adequately controlled according to type of the powder 100a and treatments. When the powder 100a is to be melted and spheroidized by the heat of the flame F, flame F temperature is set at melting point of the powder 100a or higher.

The raw material powder 100a thrown into the combustion flame F controlled at an adequate size and temperature stays in the flame F for a predetermined time to be melted or chemically and physically modified while falling in the chamber 20 by gravity. It is cooled while falling in the chamber 20 and solidified.

The raw material powder 100a becomes the treated powder 100b after passing through the combustion flame F. The "chemical and physical modification" described above means changing morphology, purity, particle size, particle structure, particle shape or surface properties of the powder 100a.

The taper section 20b in the chamber 20, where the raw material powder 100a is treated in a manner described above, has an opening at the bottom, through which it is connected to the recovering container 41. One side of the recovering container 41 is connected to the cyclone 42.

The treated powder 100b having fallen in the chamber 20 is accumulated on the recovering container 41 base, and partly sent to the cyclone 42 together with the gas (the treated powder 100b accumulated in the container 41 is hereinafter referred to as treated powder 100c (melting-treated powder, a spherical powder or spherical oxide powder).

The cyclone 42 separates the solid (treated powder 100b) from the gas, the solid accumulating on the cyclone 42 base as the treated powder 100c while the gas is placed in the upper part of the cyclone 42.

The treated powder 100c is recovered from the container 41 and cyclone 42 in which the treated powder 100c accumulates on the base, whereby the spherical treated powder 100c can be obtained.

The filter 52, e. g. , bag filter, is provided on the cyclone 42, to recover in the filter body 52a the treated powder 100c remaining in the gas discharged by the cyclone 42, the gas being selectively discharged by the fan 53 through the discharge pipe 54.

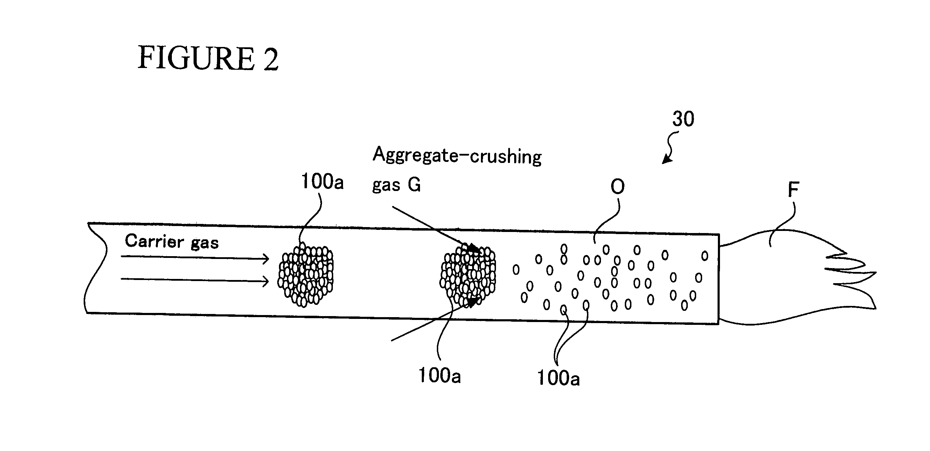

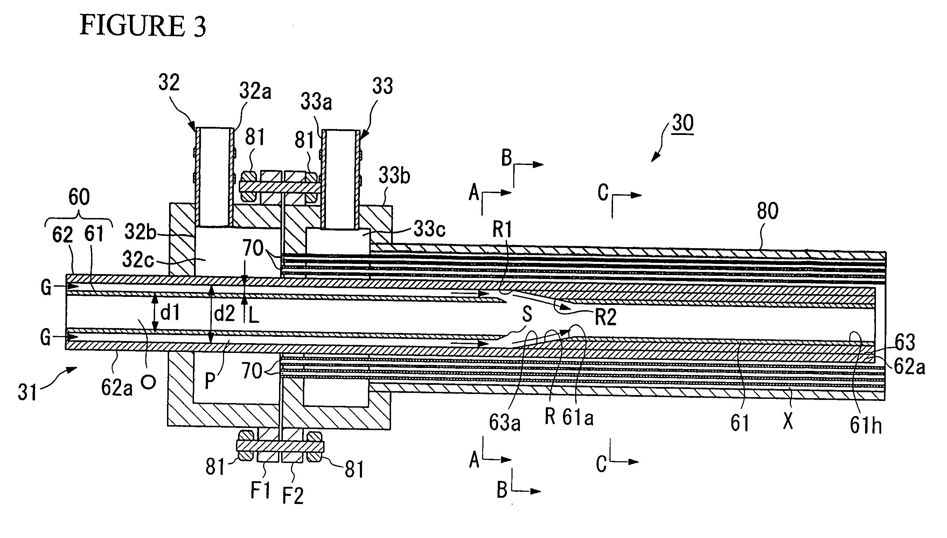

Next, the burner 30, which is characteristic of the present invention, is described by referring to Figures 2 to 4. In Figures 2 and 3, the left side of the paper is referred to as the upstream side, and right side to the downstream side, according to the flow direction of the raw material powder 100a.

Figure 2 schematically illustrates features of the burner 30 as this embodiment of the present invention.

In the burner 30, the raw material powder 100a is transferred together with a carrier gas in the raw material transferring route O, as shown in Figure 2. The burner 30 generates the combustion flame F at the downstream end of the route O, to spheroidize the powder 100a in the flame F. The powder 100a particles will naturally aggregate while being held in a feeder (not shown), and the resulting aggregate, when directly supplied into the flame F by the route O, may cause problems, e.g., production of coarse particles or unmelted particles. In the present invention, the aggregate-crushing gas G is injected from the outer periphery of the route O into its inside to crush the aggregated particles. This allows the raw material powder 100a to be thrown into the flame F while being kept crushed. Therefore, the burner 30 of the present embodiment can suppress occurrence of coarse particles or unmelted particles.

The aggregate-crushing gas G may be the same kind as the carrier gas, e.g., air, an oxidizing gas or inert gas. It may be also the fuel gas described above, e.g., LPG, hydrogen or acetylene.

The burner 30 structure of this embodiment of the present invention is described in detail, following description of the mechanism by which the aggregate-crushing gas G ejected onto the raw material powder 100a being transferred crushes the aggregated powder 100a particles.

It is necessary to act a higher external force on the raw material powder 100a aggregate than the adhesion force between the primary particles which constitute the aggregate, in order to crush and disperse the aggregated particles. The external force which the present invention adopts is mainly composed of two components; one is a shear force provided by the gas flow ejected onto the aggregated particles, and the other is a force generated by the accelerated gas flow.

The present invention injects the aggregate-crushing gas G into the raw material transferring route O, in which the carrier gas is also flowing, at a predetermined angle. A shear flow field is produced in the raw material transferring route O by the two types of gas flows, carrier gas and aggregate-crushing gas G, flowing at a relative angle between them. When the aggregated particles are thrown into the shear flow field, the primary particles which constitute the aggregate are also subjected to the shear stress. They are crushed when the shear force acting on them is higher than the adhesion force between them.

When the carrier gas and aggregate-crushing gas G flow at different rates, the gas flowing at a higher rate accelerates the other. For example, the aggregate-crushing gas G accelerates the carrier gas when the former flows at a 2 times higher rate than the latter. In other words, an acceleration produced by aggregate-crushing gas G acts on the carrier gas. The aggregated particles which have moved at a certain constant rate by the carrier gas change in movement condition, when subjected to the acceleration. They are crushed when the external force acting on them is higher than the adhesion force between the primary particles which constitute the aggregated particles. The aggregated particles are crushed by the similar mechanism, when the carrier gas flows at a higher rate than the aggregate-crushing gas G.

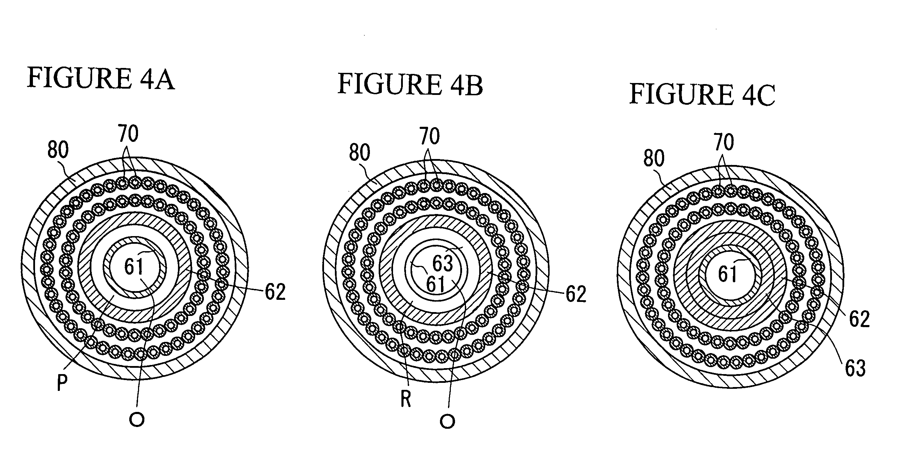

Figure 3 is a sectional view illustrating the burner 30 structure. Figures 4A, 4B and 4C are sectional views of the burner 30 shown in Figure 3 along the line A-A, B-B and C-C, respectively.

As shown in Figures 3 and 4, the burner 30 of this embodiment of the present invention has a substantially cylindrical outer case 80.

The outer case 80 contains the raw material powder supply pipe 60, placed concentrically with the outer case 80. The raw material powder supply pipe 60 works as the raw material transferring route O, described above. It constitutes the raw material powder supply pipe system 31 together with a feeder (not shown) which holds the raw material powder 100a.

The outer case 80 also contains a predetermined number of the oxygen supply pipes 70, placed to surround the outer periphery of the raw material powder supply pipe 60. In Figure 3, the oxygen supply pipes 70 are placed doubly. However, the present invention is not limited to this configuration.

The outer case 80 is connected to the fuel gas supplying system 33 at the upstream side, and the combustion flame F is generated at the downstream side. The fuel gas supplying system 33 is composed of a fuel gas supplying means (not shown), fuel gas supply pipe 33a and chamber 33b. A fuel gas, e.g., LPG, supplied by the fuel gas supplying means is sent to the chamber 33b via the fuel gas supply pipe 33a. The gas chamber 33c in the chamber 33b is in communication with the outer case 80. This allows a fuel gas, e.g., LPG, to flow from the gas chamber 33c in the chamber 33b into the burner 30 through the opening provided on the downstream side via the space inside of the outer case 80 and outside of the oxygen supply pipes 70.

The oxygen supplying system 32 and oxygen supplying system 33 are provided as a pair, and connected to each other via the bolts 81 and flanges F1 and F2.

The oxygen supplying system 32 is composed of an oxygen supplying means (not shown), oxygen supply pipes 70, oxygen supply pipe 32a and chamber 32b. Oxygen supplied by the oxygen supplying means as a combustion assist gas is sent into the gas chamber 32c in the chamber 32b via the oxygen supply pipe 32a. The oxygen supply pipes 70 placed in the outer case 80 go through the gas chamber 33c and are open to the gas chamber 32c at the upstream ends. This allows oxygen supplied by the oxygen supplying means to flow from the gas chamber 32c into the oxygen supply pipes 70 and then injected into the burner 30 through the opening provided on the downstream side.

This allows a fuel gas, e. g. , LPG, and a combustion assist gas, e.g., oxygen, to be injected into the burner 30 through the opening provided on the downstream side. The combustion flame F is generated, when the burner is ignited.

The burner 30 of this embodiment of the present invention is characterized by being equipped with a mechanism (dispersing means) in the raw material powder supply pipe 60 to crush the aggregated raw material powder 100a particles. The raw material powder supply pipe 60 goes through the chambers 32b and 33b, and is connected to the feeder (not shown) at the upstream side and constitutes the opening 61h at the downstream side. The raw material powder 100a, transferred by the carrier gas from the upstream side of the raw material powder supply pipe 60, is supplied into the combustion flame F from the downstream opening 61h of the burner 30. In the present invention, the raw material powder supply pipe 60 is structurally devised to eject the aggregate-crushing gas G onto the raw material powder 100a being transferred to crush the aggregated particles, before the powder 100a is supplied into the combustion flame F.

The raw material powder supply pipe 60 has a double-layered pipe structure, with the first supply pipe 61 (raw material transferring pipe, passage) and second supply pipe 62 having an inner diameter d2 larger than outer diameter d1 of the pipe 61 to contain the pipe 61. The first supply pipe 61 is cylindrical with the opening 61h at one end, and works as the raw material transferring route O. The second supply pipe 62 is structured to be detachably attached to the first supply pipe 61.

The first supply pipe 61 is supported by the cylindrical sleeve 63, provided in the space between the first supply pipe 61 and second supply pipe 62, to run through the second supply pipe 62 concentrically. The space between the first supply pipe 61 and second supply pipe 62 works as the gas passage P for the aggregate-crushing gas G. The aggregate-crushing gas G flows from the upstream side of the burner 30 towards the downstream side. The clearance L between the inner diameter d2 of the second supply pipe 62 and outer diameter d1 of the first supply pipe 61 may be adequately set at, e.g. , 0.5 to 10 mm, to control flow rate and velocity of the aggregate-crushing gas G.

The first supply pipe 61 is provided with a plurality of the slits (one or more notches, communication parts) S on the pipe wall, arranged in the peripheral direction either intermittently at intervals or continuously, by which the raw material transferring route O and gas passage P are in communication with each other.

Size of the slit S may be adequately set according to size of the first supply pipe 61 and flow rate of the rawmaterial powder 100a. Position of the slit S in the axial direction is set according to distance to the combustion flame F. More specifically, the slits S are arranged on the first supply pipe 61 at a distance of 10 to 300 mm from the combustion flame F. At a distance below 10 mm, it may be difficult to securely crush the aggregated raw material powder 100a particles before the powder 100a is supplied into the combustion flame F. On the other hand, a distance above 300 mm is not desirable, because of possibility of re-aggregation of the crushed particles while they are being transferred.

It is preferable to inject the aggregate-crushing gas G at an angle of 5 to 85° to the axis of the first supply pipe 61. When the gas is injected at an angle θ below 5°, impact on the raw material powder 100a may be insufficient to sufficiently crush the aggregated particles in the raw material powder 100a.

At an injection angle θ above 85°, on the other hand, the raw material powder 100a may tend to stick to the first supply pipe 61 and inner wall of the second supply pipe 62.

Therefore, the angle θ at which the aggregate-crushing gas G is injected is preferably set at 5 to 85°. In order to control the injection angle at 5 to 85° for the aggregate-crushing gas G, the first supply pipe 61 is partly cut to form the slits S on the first supply pipe 61 in such a way that they are slanted at 5 to 85° to the axis of the first supply pipe 61. Moreover, the taper R (communication part) is provided on the first supply pipe 61 and sleeve 63 in the second supply pipe 62 in such a way to slant at 5 to 85° to the axis of the second supply pipe 62 by connecting the first supply pipe 61 at the end surface 61a to the sleeve 63 at the end surface 63a. The aggregate-crushing gas G is injected more preferably at an angle θ of 15 to 75°, still more preferably 20 to 60°.

Number of the slits S is not limited. Preferably, a plurality of the slits S are arranged on the first supply pipe 61 in the peripheral direction, in order to efficiently crush the aggregated raw material powder 100. Shape of the slit S is not limited. It may be circular, ellipsoidal, rectangular or wedge-shaped.

The second supply pipe 62 and first supply pipe 61 are apart from each other by the predetermined clearance L from the cylindrical section 62a to the upstream end R1 of the taper R, to provide the gas passage P for the aggregate-crushing gas G. The downstream end R2 of the taper R, on the other hand, comes into contact with the outer periphery of the first supply pipe 61, at which the gas passage P ends.

In the burner 30 as this embodiment of the present invention, the first supply pipe 61 and second supply pipe 62 are in communication with each other via the slits S and taper R, which work as the communication parts for directing the aggregate-crushing gas G into the first supply pipe 61 at a predetermined angle. The slits S also work as gas injecting routes by which the aggregate-crushing gas G is injected from the outer periphery of the first supply pipe 61 into the pipe 61 inside.

The above structure allows the aggregate-crushing gas G, sent into the space between the second supply pipe 62 and first supply pipe 61, to flow into the first supply pipe 61 via the slits S. The aggregate-crushing gas G is injected into the first supply pipe 61 via the taper R to cross, at a predetermined angle, the carrier gas and raw material powder 100a flowing in the pipe 61, where the taper R is slanted at a predetermined angle θ to the axis of the second supply pipe 62. Therefore, the aggregate-crushing gas G crushes the aggregated raw material powder 100a particles being transferred before the powder 100a is supplied into the combustion flame F.

In the burner 30, the fuel gas, sent by the fuel gas supplying system 33, passes through spaces X between a number of the oxygen supply pipes 70 placed in the outer case 80, to be injected downwards from the lower end of the burner 30. At the same time, oxygen, sent by the oxygen supplying system 32 as a combustion assist gas, passes through the oxygen supply pipes 70, to be injected also downwards from the lower end of the burner 30. The fuel gas and oxygen, ejected downwards, generate the combustion flame F extending downwards, when the fuel gas is ignited.

The raw material powder 100a, sent by the raw material powder supplying system 31 together with the carrier gas, passes through the raw material transferring route O formed by the first supply pipe 61, and is supplied into the combustion flame F generated below the burner 30. In this embodiment of the present invention, the gas passage P is provided between the first supply pipe 61, which works as the raw material transferring route O, and second supply pipe 62 which contains the pipe 61. The burner 30 is structured to inject the aggregate-crushing gas G passing through the gas passage P into the raw material transferring route O at a predetermined angle θ, in order to crush the aggregated raw material powder 100a particles, before the powder 100a is supplied into the combustion flame F. This allows the crushed particles to be supplied into the combustion flame F.

The apparatus 10 for producing a spherical powder can prevent the rawmaterial powder 100a from naturally aggregating in a feeder (not shown) in which it is held to be supplied to the burner 30 or from aggregation while being transferred more ef f iciently than a conventional apparatus, when the powder 100a is incorporated with a treating agent or another additive to prevent its aggregation. Moreover, the apparatus 10 heats the powder 100a incorporated with a treating agent in a furnace. This at least melts or further evaporates the agent to allow it to stick to the powder 100a surfaces thinly and uniformly, i.e., entirely. As a result, the effect of preventing aggregation of the particles can be realized more securely.

Therefore, the raw material powder 100a can be supplied into the combustion flame F in an aggregate-crushed and well-dispersed condition.

Thus, the apparatus 10 for producing a spherical powder can suppress occurrence of coarse particles or unmelted particles to a much higher extent than a conventional apparatus, thereby stabilizing and improving quality of the spherical powder product. Coarse particles, when evolved, cause problems, e.g., decreased temperature of the combustion flame F and uneven temperature distribution, making it difficult to securely melt the raw material powder 100a, which is accompanied by increased unmelted particles. Moreover, it is more difficult to establish a stable relationship between particle size of the raw material powder 100a and that of the spherical powder product, and hence to control particle size distribution of the product, as incidence rate of coarse particles increases. By contrast, the burner 30 of this embodiment can crush the raw material powder 100a particles, even when they are aggregated, before the powder 100a is supplied into the combustion flame F to be melted therein. Therefore, it can establish a stable relationship between particle size of the raw material powder 100a and that of the spherical powder product, making it easier to control particle size distribution of the spherical powder product. As a result, it can securely produce the spherical powder of desired particle size distribution. Moreover, the burner 30 of this embodiment is structured to have the first supply pipe 61 detachably attached to the second supply pipe 62. It is therefore easy to exchange only the first supply pipe 61, which tends to be more eroded by the raw material powder 100a.

The inner diameter of the first supply pipe 61 may be set at 3 to 50 mm. Increasing the diameter to the above level can increase the treated amount of the raw material powder 100a. It is anticipated that more aggregated particles are thrown into the combustion flame F without being crushed to increase occurrence of coarse particles, as the diameter increases. However, the burner 30 of this embodiment can increase capacity of treating the raw material powder 100a without causing the problems, e.g., occurrence of coarse particles, because it can crush aggregated particles by injecting aggregate-crushing gas G from the outer periphery part of the raw material transferring route O into its inside. The first supply pipe 61 may be 100 to 500 mm long. Wall thickness of the first supply pipe 61 wall may be adequately set in a range from 1 to 10 mm.

The first supply pipes 61 of different slit S size may be prepared to cope with various aggregation extents or flow rates of the raw material powder 100a. For example, the first supply pipe 61 of smaller slit S size may be used when the raw material powder 100a is aggregated more intensely (to a higher extent), to increase injection velocity of the aggregate-crushing gas G.

The burner 30 of this embodiment and apparatus 10 for producing a spherical powder, equipped with the burner 30, are described in detail. The treated powder 100c, produced by the apparatus 10 equipped with the burner 30 exhibits excellent characteristics according to specific treatment objects, e.g., high-crystallinity, dense powder, single-crystal powder, or a spherical powder (powder of high sphericity). The powder produced by this embodiment has a mean particle size of around 0.1 to 20 µm. The mean particle size can be decreased to 1 to 10 µm, or even to 1 to 5 µm. The treated powder 100c can give a product of excellent characteristics, or material or part of special structure of function, when combined or mixed with another material. More specifically, it can give a filter for high frequencies or the like.

This embodiment can produce a powder having a sphericity of 0.8 to 1.0, or still higher sphericity of 0.9 to 1. The treated powder 100c having a sphericity of 0.8 to 1 will have an improved packing property of the treated powder 100c, a property of importance when it is combined with a resin material to form a composite. The treated powder 100c having a sphericity of 0.8 or more can be dispersed more uniformly in the resin. When the treated powder 100c is to be made spherical, it preferably has a sphericity of 0.85 to 1, more preferably 0.9 to 1. The "spherical" particle includes a perfect sphere of smooth surface, and polyhedron very close to a perfect sphere. More specifically, such a polyhedron includes a particle having isotropic symmetry surrounded by stable crystal planes, as represented by the Wulff model, and a sphericity close to 1. Even a particle having very fine irregularities on the surface, or an ellipsoidal section falls into the category of "spherical" particle of the present invention, so long as it has a sphericity of 0.8 to 1.0. The term "sphericity" means the Wadell's practical sphericity, defined as a ratio of diameter of the circle having the same projected particle area to diameter of the smallest circle circumscribing the projected particle image.

The above embodiment describes the present invention having the gas passage P provided between the first supply pipe 61 and second supply pipe 62 to supply the aggregate-crushing gas G. However, the present invention is not limited to the above design. For example, the first supply pipe 61 in which a carrier gas flows may be provided with one or more nozzles on the inner wall, through which the aggregate-crushing gas G is injected at a predetermined angle θ. The gas can crush the aggregated raw material powder 100a particles, when it flows at a sufficiently high relative velocity to generate a force larger than a drag force provided by the primary particles constituting the aggregate.

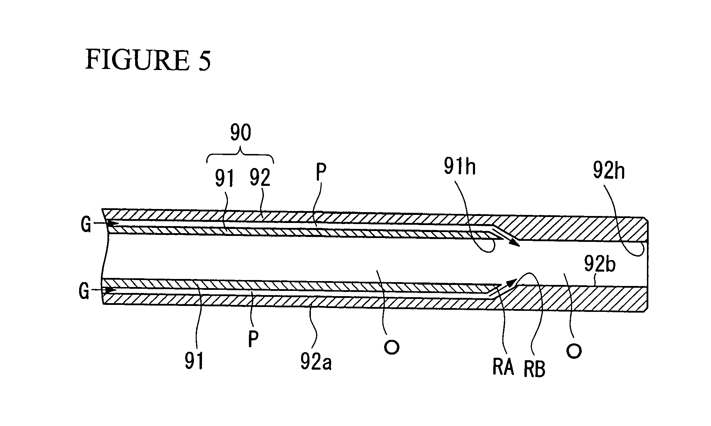

In the burner 30 shown in Figure 3, the raw material powder supply pipe 60 is composed of the first supply pipe 61 and second supply pipe 62 having the openings at the same downstream position, where the aggregate-crushing gas G flowing in the gas passage P provided between the first supply pipe 61 and second supply pipe 62 is injected into the first supply pipe 61 through the slit S provided in the first supply pipe 61. The above configuration represents only one example, and various variations can be made without departing the scope of the present invention, which intends to inject the aggregate-crushing gas G into the raw material transferring route O at a predetermined angle. One of the variations is described in Figure 5.

Figure 5 illustrates the variation of the raw material powder supply pipe 60 which constitutes a part of the burner 30. In this embodiment, the first supply pipe (raw material powder transferring pipe) 91 and second supply pipe (raw material powder transferring pipe) 92 which holds the pipe 91 constitute the raw material powder supply pipe 90.

As shown in Figure 5, the first supply pipe 91 working as the raw material transferring route O has the opening 91h at one end, which is contained in the second supply pipe 92 and located upstream of the opening 92h at one end of the pipe 92. As shown, the aggregate-crushing gas G may be injected into the raw material transferring route O at a predetermined angle through the gap between the taper (communication part) RA and taper RB (communication part), where the taper RA is formed at the downstream end of the first supply pipe 91 and the taper RB is formed to face the taper RA at the downstream side of the second supply pipe.

In the embodiment shown in Figure 5, the first supply pipe 91 having a constant diameter is cut at the downstream end of the wall to have the taper RA of steeple shape. The second supply pipe 92, on the other hand, is composed of the cylindrical section 92a having a constant diameter, taper RB gradually tapering downwards and cylindrical section 92b connected to the downstream end of the taper RB, where the taper RB is formed to face the taper RA. The cylindrical section 92b and the first supply pipe 91 have almost the same inner diameter, the former also working as the raw material transferring route O. In other words, the raw material powder 100a is supplied into the combustion flame F after passing through the first supply pipe 91 and cylindrical section 92b of the second supply pipe 92. The first supply pipe 91 and second supply pipe 92 are connected to each other by a joint (not shown).

The aggregate-crushing gas G can be injected into the raw material transferring route O through the gap between the tapers RA and RB at a predetermined angle, i.e., 5 to 85°C, by slanting these tapers at 5 to 85°C to the axis of the first supply pipe 91, and of the second supply pipe 92. It is easier to cut the pipe wall to have a steeple shape at the downstream end than to form the slit(s) S in a part of the pipe wall. Therefore, the burner 30 adopting the raw material powder supply pipe 90 shown in Figure 5 can be made more easily.

This embodiment describes spheroidization treatment of the raw material powder 100a as one example to which the burner 30 is applicable. However, application of the burner 30 is not limited to the above. For example, it may be applicable to surface treatment and oxidation/reduction treatment.

Next, the present invention is described in more detail by Examples.

### Example 1

A BNT-based ceramic dielectric powder (BaNd₂Ti₄O₁₂) having a D50 (particle size at a cumulative volumetric ratio of 50%) of 1.8 µm and D100 (particle size at a cumulative volumetric ratio of 100%) of 4.6 µm was sufficiently dried and thrown into a flame generated by an LPG-firing burner by a predetermined supplying procedure and at a predetermined flow rate for spheroidization treatment. A total of 8 types of the samples were prepared.

Samples 1 to 7 were prepared by the above embodiment having a structure for supplying an aggregate-crushing gas, where the aggregate-crushing gas G was injected at a varying angle of 5°, 15°, 30°, 45°, 60°, 75° or 85° to the central axis of the burner 30. The burner 30 shown in Figure 3 had the clearance L of 1.5 mm and the slit S with 6 cut edges each having an area of 0.5 mm by 1.0 mm. The first supply pipe 61 had an inner diameter of 16 mm.

Air as a carrier gas was injected into the first supply pipe 61 at 20 L/minute and, at the same time, air as the aggregate-crushing gas G was injected into the second supply pipe 62 at 10 L/minute. LPG as a fuel gas and oxygen as a combustion assist gas were also injected at 15 and 75 L/minute, respectively.

Moreover, Sample 8 was prepared by a conventional apparatus having neither slit S nor taper R, for comparison. Sample 8 was prepared under the same conditions as those for Samples 1 to 7, except that no aggregate-crushing gas G was injected.

Each of Samples 1 to 8 prepared above was observed by a scanning electron microscope (SEM) for 20 viewing fields at a magnification of 5, 000, to count unmelted particles and determine the average number of particles per one field. Incidence rate of coarse particles was evaluated by cumulative fraction of melted particles having a diameter of 4.6 µm or more.

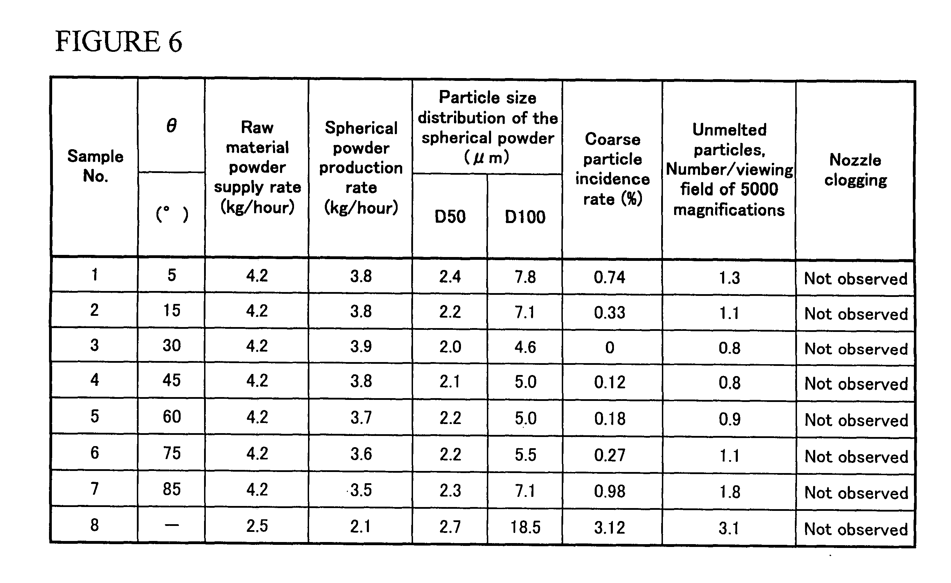

The results are shown in Figure 6.

As shown in Figure 6, each of Samples 1 to 7 prepared with the aggregate-crushing gas G has a smaller number of unmelted particles than Sample 8 prepared without the aggregate-crushing gas G. It is particularly noted that Samples 2 to 6 prepared with the aggregate-crushing gas injected at a respective angle θ of 15°, 30°, 45°, 60° and 75° have a smaller number of unmelted particles than Samples 1 and 7 with the gas G injected at a respective angle θ of 5° and 85°. By contrast, Sample 8 prepared by a conventional apparatus has a larger number of unmelted particles, particularly noted as compared with samples 2 to 6 with the gas G injected at an angle θ of 15° to 75°.

Figure 6 also gives supply rates of the raw material for Samples 1 to 8. The supply rate for Samples 1 to 7 was 4.2 kg/hour. This compares with 2.5 kg/hour for Sample 8, by which is meant that it was the highest possible capacity of the conventional burner. By contrast, the present invention with an aggregate-crushing gas can treat the raw material at 4.2 kg/hour to produce a spherical powder while keeping incidence rate of coarse particles at low 1% or less.

As for particle size distribution of the spherical powder, Samples 1 to 7 prepared with the aggregate-crushing gas have a D50 of 2.0 to 2.4 µm and D100 of 4.6 to 7.8 µm, which are almost corresponding to those of the raw material powder (D50: 1.8 µm and D100: 4.6 µm). It is particularly noted that Samples 3 to 6 prepared with the aggregate-crushing gas injected at an angle θ of 30° to 75° have these levels well corresponding to those of the raw material powder. By contrast, Sample 8 prepared by a conventional apparatus has a D100 of 18.5 µm, which greatly deviates from that of the raw material powder (4.6 µm).

### Example 2

In Example 2, the effects of treating agents for aggregation prevention were evaluated. The results are described.
Raw material: Barium titanate
Treating agent: Two types of agents were used, stearic acid and stearic acid amide
Samples 11 to 16 were prepared to have the following compositions:
   Sample 11: Raw material powder: 800 g, Treating agent: 0% by weight
   Sample 12: Raw material powder: 800 g, Stearic acid: 2.0% by weight
   Sample 13: Raw material powder: 800 g, Stearic acid: 1.5% by weight
   Sample 14: Raw material powder: 800 g, Stearic acid: 1.0% by weight
   Sample 15: Raw material powder: 800 g, Stearic acid: 0.5% by weight
   Sample 16: Raw material powder: 800 g, Stearic acid amide: 1.0% by weight

   where, amount of treating agent, % by weight, is based on the amount of raw material.

Each composition was heated in a furnace kept at 100°C for 10 minutes, and stirred after it was taken out of the furnace. It was subjected to 3 heating/stirring cycles, cooled and passed through a sieve (opening: 74 µm) for fluidity evaluation.

For fluidity evaluation, each composition was passed downwards through a mesh (500 µm) and received by a cell (container) of around 20 mL (milliliter), placed below the mesh, to form a heap of the raw material powder 100a with an apex. Repose angle of the heap (angle of slope of the heap to the cell surface) was measured.

The portion of the powder projecting upwards from the cell was removed by a spatula along the surface of the cell, and the remaining portion was weighed to determine its bulk density, based on the cell volume.

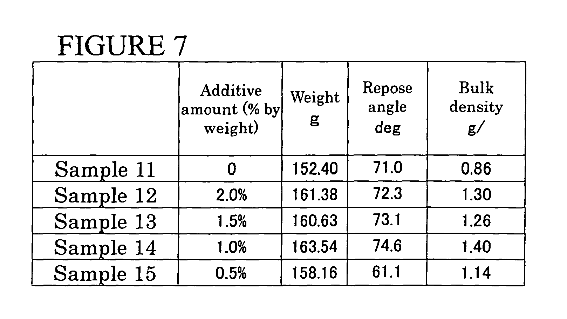

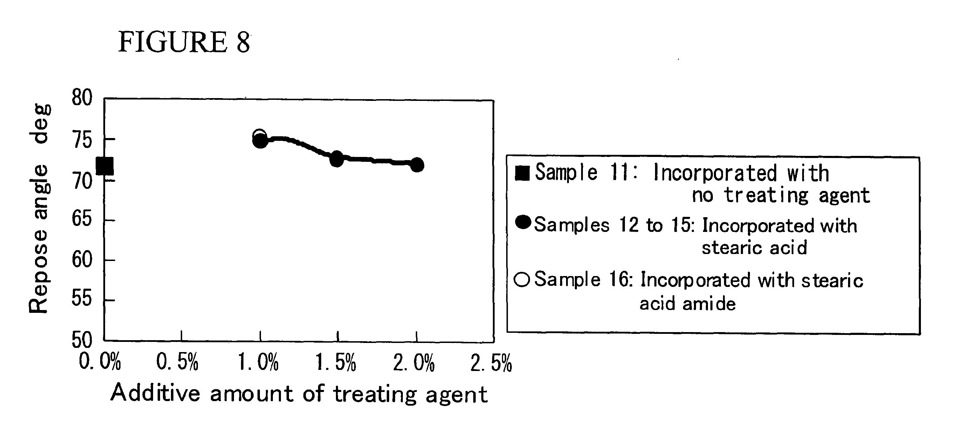

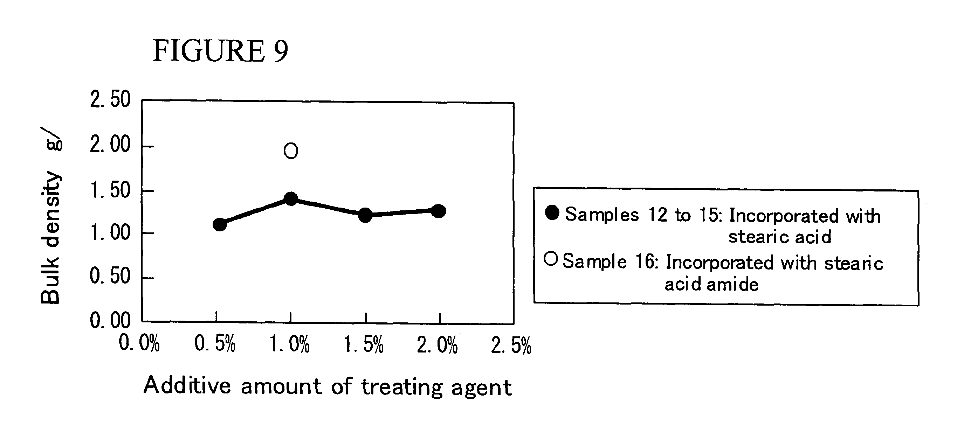

The results are predetermined in Figures 7, 8 and 9.

As shown in Figures 7, 8 and 9, Samples 12 to 15 show a lower repose angle, although slightly, than Sample 11 incorporated with no treating agent. It is also noted that the angle decreases as the amount of stearic acid increases. Bulk density, on the other hand, remains essentially constant irrespective of the amount of stearic acid (Samples 12 to 15).

These results indicate that stearic acid works to increase fluidity of the raw material powder 100a.

Next, each of the raw material powder 100a compositions (Samples 11 and 12) was put in a feeder (not shown) for the apparatus 10 for producing a spherical powder to be spheroidization-treated by the combustion flame F generated by the burner 30.

The burner 30 was supplied with oxygen at 75 L (liter) /minute by the oxygen supplying system 32 and LPG at 15 L/minute by the fuel gas supplying system 33, to generate the combustion flame F. The raw material powder supplying system 31 supplied the raw material powder 100a by driving the feeder at 1.20 rpm into the combustion flame F to be melted therein, where N₂ gas as a carrier gas was injected in the system 31 at 70 L/minute.

Supply conditions of the raw material powder 100a were observed while it was being melted.

After the melting-treated powder 100c was recovered, N₂ gas as a carrier gas was injected at a higher rate of 120 to 140 L/minute to purge the raw material powder 100a remaining in the pipelines in the raw material powder supplying system 31 and burner 30 into the combustion flame F to be melted therein. The powder 100c thus treated was also recovered.

It was confirmed that Sample 11 incorporated with no treating agent, Sample 15 incorporated with 0.5% by weight of stearic acid and Sample 16 incorporated with stearic acid amide caused clogging of the burner 30 by the raw material powder 100a.

On the other hand, Samples 12 to 14 incorporated with stearic acid at 1% by weight or more caused no clogging.

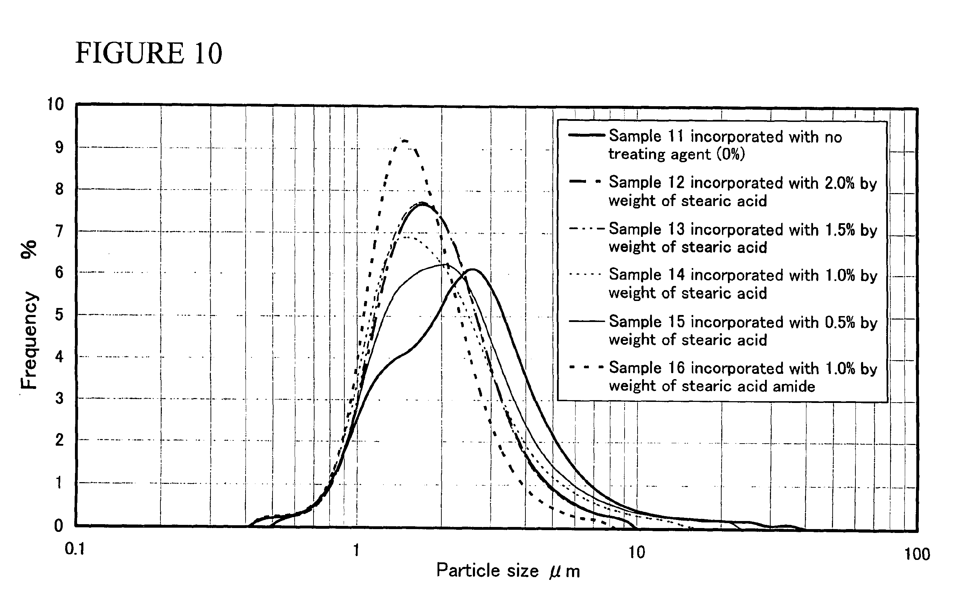

Particle size distribution of the treated powder 100c was measured for each composition. The results are shown in Figure 10.

As shown in Figure 10, each of Samples 12 to 16 had a particle size distribution peak shifted to the smaller diameter side from the peak of Sample 11 incorporated with no treating agent. It was also observed that Sample 11 incorporated with no treating agent, and Samples 14 and 15 incorporated with stearic acid at 1.0% by weight or less contained coarse particles having a diameter of 5 µm or more.

Moreover, Sample 16 incorporated with 1.0% by weight of stearic acid amid had a sharper particle size distribution than Sample 14 incorporated with 1.0% by weight of stearic acid.

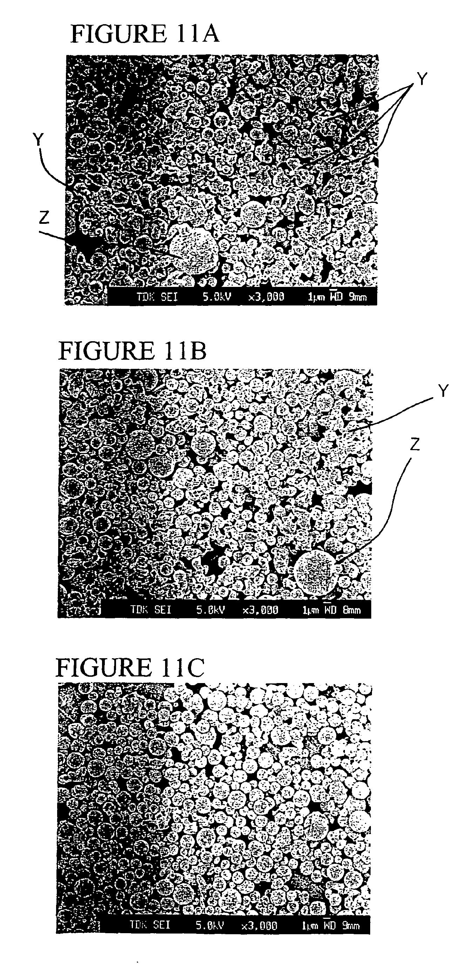

Figure 11 presents the photographs showing the structures of Sample 11 incorporated with no treating agent (Figure 11A)), Sample 12 incorporated with 2.0% by weight of stearic acid (Figure 11B) and Sample 13 incorporated with 1.5% by weight of stearic acid (Figure 11C).

Sample 11 incorporated with no treating agent contained a number of irregular shaped particles Y which were neither melted nor spheroidized (Figure 11A). On the other hand, Sample 12 incorporated with 2.0% by weight of stearic acid did not have a good particle size distribution than the others incorporated with the treating agent (Figure 10). Nevertheless, however, it contained a limited number of unmelted, irregular shaped particles Y, indicating that it was melted as a whole, although containing the coarse particles Z (Figure 11B). Sample 13 incorporated with 1.5% by weight of stearic acid had a neat particle size distribution (Figure 10), and contained a limited number of unmelted, irregular shaped particles, indicating that it was melted as a whole, and also contained a limited number of coarse particles Z (Figure 11C).

Based on the above evaluation results, the raw material powder 100a can have improved fluidity, when incorporated with the treating agent. In consideration of fluidity, and prevention of the coarse particle Z and irregular shaped particle Y occurrence all together, the treating agent is incorporated with the raw material powder 100a preferably at around 1.5% by weight.

### Example 3

In Example 3, the effects of an additive for aggregation prevention were evaluated. The results are described.
Raw material: BaO (13.9%)-Nd₂O₃ (17.2%)-Bi₂O₃ (2.3%)-TiO₂ (66.6%), all percentages by mol (MR2 powder)
Additive: silane coupling agent (GE-Toshiba Silicone, TSL-8113 (trade name)
   The raw material, additive and pure water were mixed under the following conditions:
   Condition 1: Rawmaterialpowder: 800 g, Additive: 0% by weight,
   Pure water: 400g
   Condition 2: Raw material powder: 800 g, Additive: 0.1% by weight, Pure water: 400g
   Condition 3: Raw material powder: 800 g, Additive: 0.3% by weight, Pure water: 400g
   Condition 4: Raw material powder: 800 g, Additive: 0.5% by weight, Pure water: 400g
   Condition 5: Raw material powder: 800 g, Additive: 0.8% by weight, Pure water: 400g
   Condition 6: Raw material powder: 800 g, Additive: 1.0% by weight, Pure water: 400g
   Condition 7: Raw material powder: 800 g, Additive: 1.2% by weight, Pure water: 400g
   Condition 8: Raw material powder: 800 g, Additive: 1.5% by weight, Pure water: 400g
   Condition 9: Raw material powder: 800 g, Additive: 2.0% by weight, Pure water: 400g

   where, amount of treating agent, % by weight, is based on the raw material.

The raw material, additive and pure water were simply mixed under the above conditions without using a medium for ball milling, to prepare Samples 21 to 29. Moreover, they were mixed by ball-milling in the presence of a medium under same conditions (Conditions 4, 6 and 8), to prepare Samples 30, 31 and 32.

Each mixture of the raw material, additive and pure water was dried at 100°C for 8 hours in a drier furnace to remove moisture, to prepare the raw material powder 100a.

The dried raw material powder 100a (each of Samples 21 to 32) was passed through a sieve (opening: 74 µm) for fluidity evaluation.

For fluidity evaluation, 250 g of the raw material powder 100a was put in a stainless steel funnel for powder (diameter: 27 mm), to measure powder flowing-out time.

Moreover, the raw material powder 100a was passed downwards through a mesh (500 µm) and received by a cell (container) of around 20 mL, placed below the mesh, to form a heap of the raw material powder 100a with an apex. Repose angle of the heap (angle of slope of the heap to the cell surface) was measured.

The portion of the powder projecting upwards from the cell was removed by a spatula along the surface of the cell, and the remaining portion was weighed to determine its bulk density, based on the cell volume.

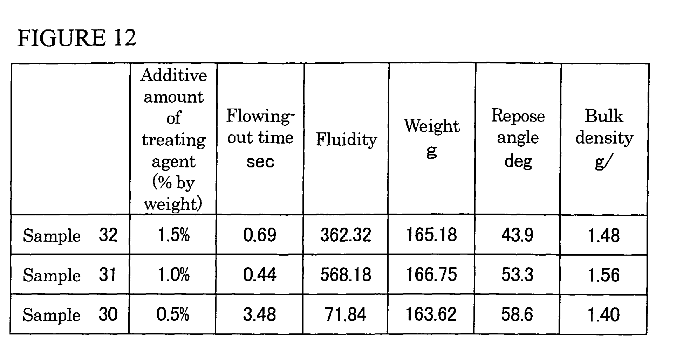

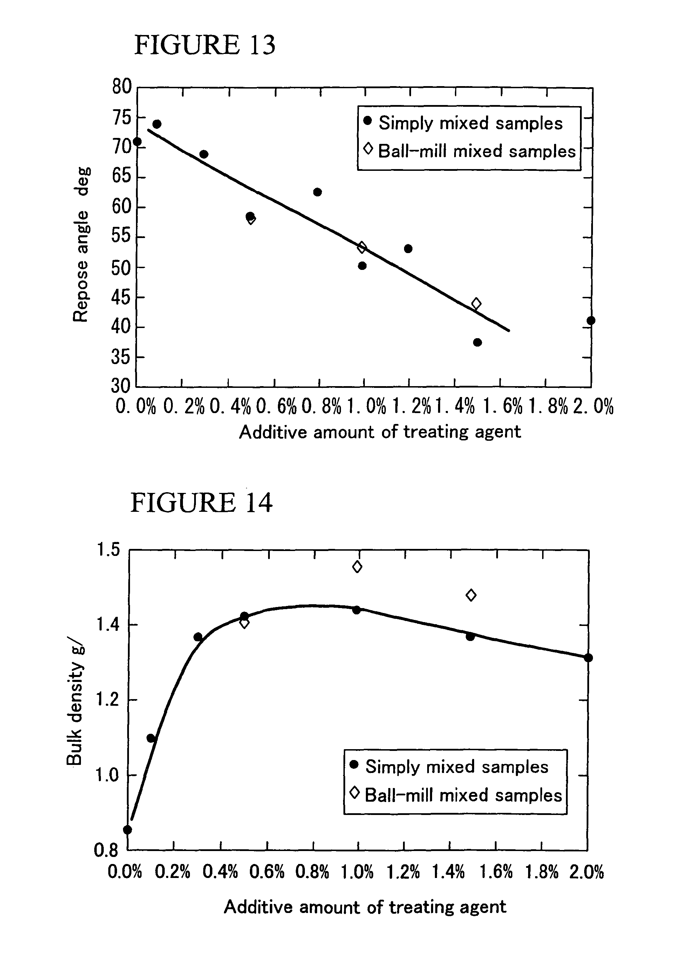

The results are shown in Figures 12, 13 and 14, where Figure 12 gives the results of Samples 30, 31 and 32 mixed with a ball mill.

As shown in Figure 12, Samples 30, 31 and 32 mixed with a ball mill had high fluidity (in particular Samples 31 and 32), because they flew out of the funnel in a very short time.

Moreover, as shown in Figures 12, 13 and 14, repose angle decreased and bulk density increased as quantity of the incorporated additiveincreased,bothforsimply mixedSamples 21 to 28 and Samples 30, 31 and 32 mixed with a ball mill.

These results clearly indicate that the additive works to improve fluidity of the raw material powder 100a.

Next, each of the raw material powder 100a compositions (Samples 21 to 32) was put in a feeder (not shown) for the apparatus 10 for producing a spherical powder to be spheroidization-treated by the combustion flame F generated by the burner 30.

The burner 30 was supplied with oxygen at 113 L/minute by the oxygen supplying system 32 and LPG at 15 L/minute by the fuel gas supplying system 33, to generate the combustion flame F. The raw material powder supplying system 31 supplied the raw material powder 100a by driving the feeder at 1.20 rpm into the combustion flame F to be melted therein, where N₂ gas as a carrier gas was injected in the system 31 at 70 L/minute.

Supply conditions of the raw material powder 100a were observed while it was being melted.

It was observed that the raw material powder 100a could be supplied smoothly, when incorporated with the treating agent at 0.5% by weight or more (Samples 24 to 32). However, it was sometimes supplied all at once, when incorporated with the treating agent at 1.5% by weight or more (Samples 27, 28, 29 and 32).

After the melting-treated powder 100c was recovered, N₂ gas as a carrier gas was injected at a higher rate of 120 to 140 L/minute and the burner 30 was vibrated to purge the raw material powder 100a remaining in the pipelines in the raw material powder supplying system 31 and burner 30 into the combustion flame F to be melted therein. The powder 100c thus treated was also recovered.

The treated powder 100c was rarely recovered by the above procedure, by which was meant that the powder 100a incorporated with the treating agent at 0.5% by weight or more caused no clogging in the burner 30 or the like.

In the above melting treatment, the test was carried out to measure particle size distribution of the treated powder 100c ejected from the burner 30.

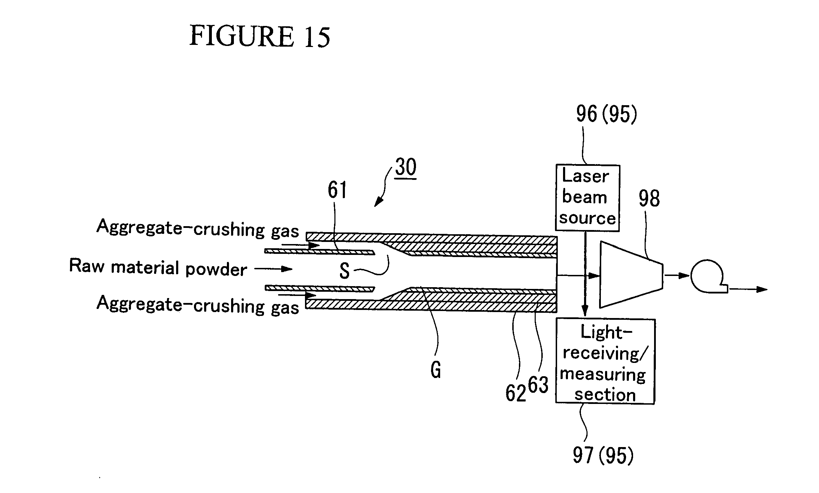

As shown in Figure 15, the raw material powder 100a was directly ejected from the burner 30 using the raw material powder supply pipe 60 and mechanism (slit S) for crushing aggregated raw material powder 100a particles, while no combustion flame F was generated and N₂ gas was supplied as the aggregate-crushing gas G at 30 L/minute, to measure particle size distribution of the flying powder 100a particles by the dry type particle size distribution analyzer 95 (SYMPTEC, HELOS & RODOS, hereinafter referred to simply as particle size distribution analyzer). More specifically, the raw material powder 100a ejected from the burner 30 was passed through the space between the laser beam source 96 and light-receiving/measuring section 97 of the particle size distribution analyzer 95, to analyze the particle size distribution. Then, the raw material powder 100a having passed therethrough was recovered by the recovering section 98.

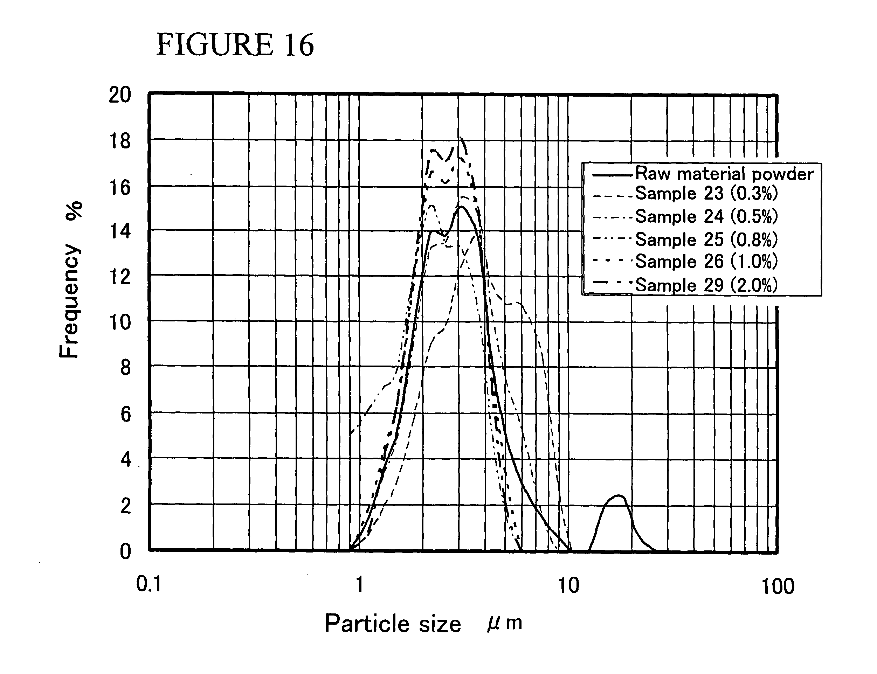

The results are shown in Figure 16. As shown, Samples 23, 24, 25, 26 and 29, each of which was the raw material powder treated with a silane coupling agent before the melting (mixing) treatment, showed a small quantity of the aggregated particles having a particle size of 5 µm or more. It is particularly noted that Samples 25, 26 and 29, incorporated with the agent at 0.8, 1.0 and 2.0% by weight, respectively, showed a good particle size distribution.

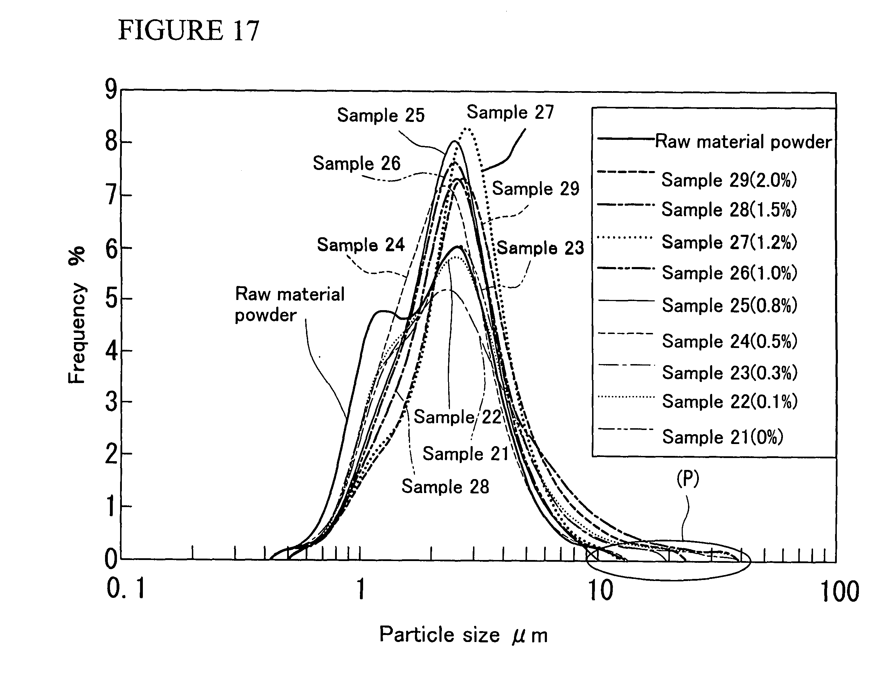

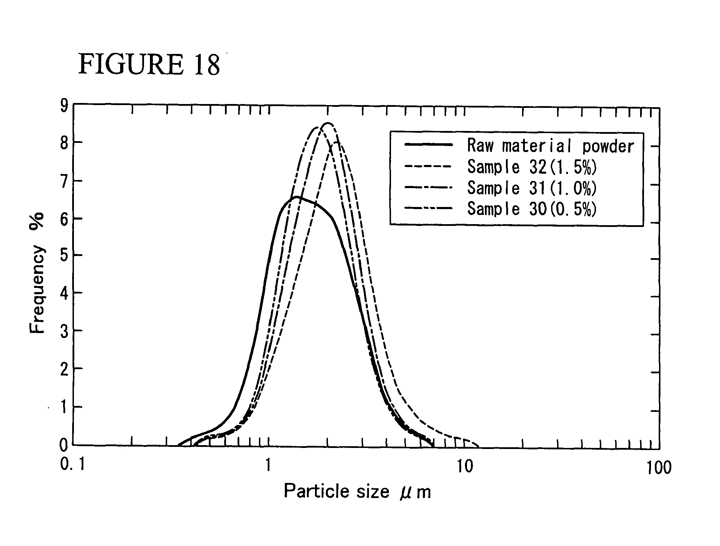

The melting-treated powder 100c was also analyzed for its particle size distribution. The results are shown in Figures 17 and 18, where the results shown in Figure 17 are those of simply mixed Samples 21 to 29, whereas the results shown in Figure 18 are those of Samples 30 to 32 mixed with a ball mill. The particle size distribution of the raw material powder 100a before melting (mixing) is also shown in each figure for comparison.

As shown in Figure 17, simply mixed Samples 21 to 29 have a particle size distribution peak shifted to the larger diameter side, whenmelting-treated, fromthat of the untreated powder, irrespective of the agent amount.

For Samples 22 to 29 incorporated with the agent, it is observed that the largest particle size of the powder incorporated with the agent at 0.5 to 1.0% by weight (Samples 24 to 26) is clearly smaller than that of the powder incorporated with the agent at 0 to 0.3% by weight (Samples 21 to 23) or at 1.2 to 2.0% by weight (Samples 27 to 29), because the powder incorporated with the agent at 0.5 to 1.0% by weight (Samples 24 to 26) has a smaller quantity of the coarse particles having a diameter of 10 µm or more (represented by P in Figure 17) than the others.

Thus, it is clearly indicated that incorporation of the agent at 0.5 to 1.0% by weight reduces a largest particle size.

Samples 30 to 32 mixed with a ball mill, also have a particle size distribution peak shifted to the larger diameter side, when melting-treated, but have a decreased largest particle size, because of a limited number of the coarse particles having a diameter of 10 µm or more, or even no coarse particles, in the treated powder 100c, as shown in Figure 18.

Samples 30 to 32 mixed with a ball mill, were incorporated with the agent at 0.5 to 1.0% by weight. These amounts corresponded to those of simply mixed Samples 24 to 26, which produced good results. Ball-milled Samples 30 to 32 had a smaller largest particle size and particle size distribution peak shifted to the smaller diameter side, as compared with respective simply mixed Samples 24 to 26. These results indicate that mixing with a ball millreduces both mean particle size and largest particle size.

It is apparent, based on the above evaluation results, that the raw material powder 100a has improved dispersibility and fluidity, when incorporated with the additive, preferably at around 0.5 to 1.0% by weight. It is particularly noted that incorporation of the agent at an amount in the above range effectively decreases largest particle size. At below 0.5% by weight, the powder 100a may not be supplied smoothly, because of insufficient dispersibility and fluidity. At 1.5% by weight or more, on the other hand, the powder 100a is excessively dispersible and fluid to break the particles, with the result that the feeder may massively supplies the powder 100a sometimes like an abalanche to cause unmelted or coarse particles.

The above embodiment describes the specific burner 30 structure which can eject the aggregate-crushing gas G, at a predetermined angle, onto the raw material powder 100a being transferred by the carrier gas. However, the structure is not limited to the above, and another structure may be adopted, as required, so long as it brings the similar effect.

Any variation can be made for the apparatus 10 for producing a spherical powder within the scope of the present invention, e. g. , by omitting a member or adding another member.

### Industrial Applicability

The present invention can efficiently produce a spherical powder while suppressing occurrence of coarse particles or unmelted particles resulting from aggregation of the particles. Moreover, it can reduce equipment or maintenance cost for producing a spherical powder.

Still more, the present invention can improve fluidity of the raw material powder by incorporating a treating agent or coupling agent, and can stably supply well-dispersed raw material powder, thereby suppressing occurrence of coarse particles or unmelted particles resulting from aggregation of the particles.

## Claims

1. An apparatus for producing a spherical powder, comprising:
a cylindrical chamber having an axis extending in the vertical direction and
a burner provided in the upper part of the chamber to generate a combustion flame in the chamber, **characterized in that**
the burner comprises:
a raw material transfer pipe through which a raw material powder is transferred to the combustion flame generated by the burner and
a gas injection part in which a gas is injected from the outer periphery of the raw material transfer pipe into the pipe inside.

2. The apparatus for producing a spherical powder according to claim 1, **characterized in that** the gas injection part is provided with one or more notches formed on the wall of the raw material transfer pipe.

3. The apparatus for producing a spherical powder according to claim 2, **characterized in that** a gas passage through which the gas flows is formed on the periphery of the raw material transfer pipe and a gas flows from the one or more notches into the pipe inside.

4. A burner for treating a powder in which a raw material powder is treated in a predetermined manner using combustion flame, **characterized by** comprising:
a first supply pipe which has an opening at one end and supplies the raw material powder to the combustion flame through the opening,
a second supply pipe which supplies an aggregate-crushing gas for crushing an aggregate of the raw material powder, and
a communication part which communicates the first supply pipe with the second supply pipe to direct the aggregate-crushing gas to the first supply pipe at a predetermined angle.

5. The burner for treating a powder according to claim 4, **characterized in that** the second supply pipe has a double-layered pipe structure with the first supply pipe stored therein, and the aggregate-crushing gas flows in the space between the first supply pipe and the second supply pipe.

6. The burner for treating a powder according to claim 5, **characterized in that** the first supply pipe can be detachably attached to the second supply pipe.

7. The burner for treating a powder according to claim 4, **characterized in that** the predetermined angle is 5° to 85° with respect to the axis of the first supply pipe.

8. A method for producing a spherical powder by melting a raw material powder in a combustion flame into spheres, **characterized in that** the method comprises the steps of:
transferring the raw material powder to the combustion flame by a carrier gas,
melting the transferred raw material powder in the combustion flame into spheres to obtain a melted product; and
solidifying the melted product by moving the melted product from-the combustion flame to the outside thereof, and that
injecting a gas for imparting a shear force to the raw material powder is injected in the transferring step.

9. The method for producing a spherical powder according to claim 8, **characterized in that** the gas for imparting a shear force is the same kind as the carrier gas.

10. A method for producing a spherical powder, **characterized by** comprising the steps of:
treating the surface of a raw material powder with a treating agent or a coupling agent, the treating agent made of at least one member selected from the group consisting of a higher fatty acid or a derivative thereof, a higher hydrocarbon and a higher alcohol, and
producing a spherical powder in which the surface-treated raw material powder is put in a combustion flame generated by a burner and melted into spheres, and the raw material powder is moved from the combustion flame to the outside thereof and solidified to obtain a spherical powder.

11. The method for producing a spherical powder according to claim 10, **characterized in that** the surface treatment step involves mixing the raw material powder with the coupling agent using water as a solvent, and then removing water to treat the surface of the raw material powder.

12. The method for producing a spherical powder according to claim 10, **characterized in that** the coupling agent is methyltrimethoxysilane.

13. The method for producing a spherical powder according to claim 10, **characterized in that** the coupling agent is added the raw material powder at 0.1 to 3.0% by weight.

14. The method for producing a spherical powder according to claim 10, **characterized in that** the surface treatment step involves heating the raw material powder and the treating agent to a predetermined temperature and the stirring the mixture to treat the surface of the raw material powder.

15. The method for producing a spherical powder according to claim 10, **characterized in that** the treating agent is any of stearic acid, stearic acid amide and hydrogenated castor oil.

16. The method for producing a spherical powder according to claim 10, **characterized in that** the treating agent is added to the raw material powder at 0.1 to 8.0% by weight.

17. The method for producing a spherical powder according to claim 10, **characterized in that** in the step of producing a spherical powder, the raw material powder to be put in a combustion flame generated by a burner is dispersed by means for dispersing the raw material powder when the powder is aggregated.

18. The method for producing a spherical powder according to claim 17, **characterized in that** a gas is injected, at a predetermined angle, to a passage for supplying the raw material powder to the combustion flame in order to disperse the raw material powder, when the powder is aggregated.

19. A spherical oxide powder **characterized in that** the spherical oxide powder is produced by treating the surface of a raw material powder with a treating agent or a coupling agent, the treating agent made of at least one member selected from the group consisting of a higher fatty acid or a derivative thereof, a higher hydrocarbon and a higher alcohol; feeding the surface-treated raw material powder to a combustion flame generated by a burner to melt the powder into spheres; moving the rawmaterial powder from the combustion flame to the outside thereof; and solidifying the powder, and that
the spherical oxide powder has a mean particle size of 5 µm or less and a largest particle size of 10 µm or less.

20. An oxide powder which is melted in a combustion flame to obtain a spherical powder, **characterized in that**:
the oxide powder has a surface which is treated with a treating agent or a coupling agent, the treating agent made of at least one member selected from the group consisting of a higher fatty acid or derivative thereof, a higher hydrocarbon and a higher alcohol in order to prevent aggregation, and that
the oxide powder has a mean particle size of 5 µm or less.
